# NEUE EUROPÄISCHE PATENTSCHRIFT

(11) **EP 0 915 443 B2**
(45) Veröffentlichungstag und Bekanntmachung des Hinweises auf die Entscheidung über den Einspruch: **12.12.2007**
(45) Hinweis auf die Patenterteilung: 14.01.2004
(21) Anmeldenummer: 98120364.9
(22) Anmeldetag: 28.10.1998
(51) Int. Cl.: G08B 25/01, B60R 25/10

(54) **Vorrichtung zur Aussendung von Notrufsignalen aus einem Kraftfahrzeug**
Device for transmitting emergency signals from a motor vehicle
Dispositif d'appel d'urgence dans une voiture

(30) Priorität: 06.11.1997 DE 19748992
(43) Veröffentlichungstag der Anmeldung: 12.05.1999
(73) Patentinhaber: Delphi Technologies, Inc., Troy, MI 48098 (US)
(72) Erfinder: Reiss, Willi, 90762 Fürth (DE)
(74) Vertreter: Manitz, Finsterwald & Partner GbR

(56) Entgegenhaltungen:
- EP-A- 0 748 727
- WO-A-95/00860
- DE-A- 4 421 508
- DE-A- 19 650 176
- GB-A- 2 300 996
- JP-A- 4 268 351
- JP-A- 7 315 437
- JP-A- 8 040 614
- US-A- 5 515 043
- Vehicle distress system RD 1992 07,339

## Beschreibung

Die Erfindung betrifft eine Vorrichtung zur Aussendung von Notrufsignalen aus einem Kraftfahrzeug, mit einer Mehrzahl von Sensoren zur Detektion von unerwünschten Ereignissen, einem Autotelefon, welches einen Rufnummernspeicher und eine Sendeeinheit zur Ausstrahlung von Notrufsignalen aufweist, und einem Mikrocomputer zur Steuerung der Vorrichtung.

Aus der Zeitschrift Funkschau, Heft 20, 1997, Seiten 66 bis 68, sind bereits von verschiedenen Herstellern vorgeschlagene Systeme zur automatischen Aussendung von Notrufsignalen bekannt. Bei einem dieser Systeme wird im Falle eines Unfalls, bei dem der Airbag auslöst, automatisch eine Sprachverbindung zu einer Notrufzentrale aufgebaut, über die dann in der Notrufzentrale abgeschätzt werden kann, wie groß der Schaden ist und welche Hilfsmaßnahmen eingeleitet werden müssen. Dieses bekannte System ist weiterhin mit einem Knopf ausgerüstet, über den die Insassen des Fahrzeugs einen Hilferuf absetzen können, wenn der Crash nicht so schlimm war, Hilfe aber trotzdem notwendig ist.

Bei einem anderen dieser bekannten Systeme, bei welchem ein Notruf ebenfalls beim Auslösen des Airbags ausgesendet wird, wird dieser Notruf in ein Aufnahme-Center geleitet. In diesem Aufnahme-Center ist eine Datenbank vorhanden, in welcher Kundenprofile abgelegt sind, so daß die aufnehmende Person sofort weiß, welche Aktionen eingeleitet werden sollen. Auch bei diesem System wird zusätzlich eine Sprachverbindung aufgebaut, um eventuell Näheres über die Umstände der Panne oder des Unfalls zu erfahren. Weiterhin werden bei diesem bekannten System die Sensoren über eigens verlegte Leitungen angeschlossen, so daß von bis zu zehn verschiedenen Stellen im Auto Daten abgezapft werden können, die ebenfalls in die Zentrale übertragen werden. Dadurch ist es möglich, daß sich das Personal im Aufnahme-Center schon vorab ein Bild von der Art des Zwischenfalls machen und schnell kompetente Hilfe schicken kann.

Bei einem weiteren dieser bekannten Systeme kann der Kunde beim Kartenantrag zusätzliche persönliche Angaben machen, die dann zur Information des Notarztes zusammen mit dem Notruf übertragen werden. Die zugehörige SIM-Karte (Subscriber Identy Module) ist ab Werk gesichert im Telefonsteuergerät eingesetzt und wird bei der Auslieferung des Wagens freigeschaltet.

Bei allen diesen bekannten Systemen werden im Falle eines Unfalls Notrufsignale an eine zentrale Notrufstelle gesendet, die dann nach eigenem Ermessen eine oder mehrere weitere Hilfsdienste verständigt.

Ausgehend von diesem Stand der Technik liegt der Erfindung die Aufgabe zugrunde, eine Vorrichtung mit den im Oberbegriff des Anspruchs 1 angegebenen Merkmalen derart weiterzubilden, daß die Aussendung von Notrufsignalen effizienter erfolgt.

Diese Aufgabe wird bei einer Vorrichtung mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen ergeben sich aus den abhängigen Ansprüchen.

Aus WO95 00860 A ist offenbart, im Falle eines Verkehrsunfalls relevante Daten zu übermitteln, insbesondere an eine Notrufzentrale.

Aus US-A-5 515 043 ist offenbart, im Falle eines Unfalles eine Übermittlung der relevanten Daten vorzunehmen.

Die Vorteile der Erfindung bestehen insbesondere darin, daß durch die beanspruchte Vorrichtung sichergestellt ist, daß bereits im Kraftfahrzeug eine Auswertung der von den Sensoren gelieferten Daten erfolgt und in Abhängigkeit von diesen Daten ein oder mehrere der erforderlichen Hilfsdienste direkt vom Kraftfahrzeug aus verständigt werden. Dies hat unter anderem den Vorteil, daß bei einfachen Notsituationen die Service-Zentrale nicht unnötig belastet wird, sondern der jeweils benötigte Hilfsdienst unmittelbar vom Fahrzeug aus verständigt wird. Weiterhin wird mittels der beanspruchten Vorrichtung erreicht, daß eine Alarmierung der erforderlichen Hilfsdienste nicht vom Ermessen des Personals in der Service-Zentrale abhängig ist, welches die Lage im verunglückten Kraftfahrzeug möglicherweise nicht richtig einschätzt. Die Alarmierung wird vielmehr direkt von dem im Kraftfahrzeug vorhandenen Mikrocomputer aus initiiert, dem die Sensorsignale zur Auswertung zugeführt werden. Dieses Vorgehen erspart beispielsweise bei einem Fahrzeugbrand das Alarmieren der Feuerwehr über den Umweg der Service-Zentrale. Folglich werden erfindungsgemäß bereits im Kraftfahrzeug die von den Sensoren gelieferten Daten gesammelt und ausgewertet, so daß eine Entscheidung dahingehend, ob und welche Hilfsdienste im Einzelfall notwendig sind, bereits im Kraftfahrzeug getroffen wird. Auch die Verständigung des oder der jeweiligen Hilfsdienste (s) erfolgt direkt vom Kraftfahrzeug aus. Dadurch ist sichergestellt, daß die Verständigung des jeweiligen benötigten Hilfsdienstes schnellstmöglich erfolgt.

Die Vorteile der Merkmale eines der Ansprüche 3 bis 5 bestehen darin, daß aufgrund der verschiedenartigen Sensoren nicht nur das Vorliegen von Unfällen, sondern auch das Vorliegen von anderen unerwünschten Ereignissen wie einem Glasbruch, einem Einbruch in das Kraftfahrzeug, einem Autoradiodiebstahl oder einem Fahrzeugbrand signalisiert wird.

Im Anspruch 6 ist angegeben, welche Hilfsdienste in Falle eines unerwünschten Ereignisses in vorteilhafter Weise alarmiert werden können. Mittels der Merkmale des Anspruchs 7 wird erreicht, daß beim jeweils verständigten Hilfsdienst beim Eingehen des Notrufsignals auch sofort der Standort des die Hilfe benötigten Fahrzeugs bekannt ist.

Die Vorteile der Merkmale des Anspruchs 8 bestehen darin, daß beispielsweise auch Daten, die über besondere gesundheitliche Verhältnisse des Fahrers Auskunft geben, übermittelt werden können. Dies ermöglicht es beispielsweise, zu einem herzinfarktgefährdeten Autofahrer auch beim Vorliegen vergleichsweise leichter Unfälle stets einen Notarzt zu schicken.

Erfindungsgemäß werden im Kraftfahrzeug synthetisch erzeugte Sprachsignale gebildet, die nach dem Aufbau einer Telefonverbindung über diese übertragen werden, so daß der jeweilige Hilfsdienst akustisch über die Art und Schwere des Unfalls bzw. eines anderen unerwünschten Ereignisses informiert wird.

Die Vorteile der Merkmale des Anspruchs 9 bestehen darin, daß beispielsweise nach einem unfallbedingten Aufbau einer Telefonverbindung ein Sprechverkehr zwischen den Insassen des verunglückten Fahrzeugs und dem Personal eines angewählten Hilfsdienstes erfolgen kann. Dies ermöglicht es, dem Hilfsdienst zusätzliche Informationen über den jeweiligen Störfall zu geben. Weiterhin kann dem angerufenen Hilfsdienst über die Freisprecheinrichtung auch mitgeteilt werden, daß eine Hilfe im vorliegenden Fall gar nicht notwendig ist, da der Autofahrer selbst in der Lage ist, den Schaden zu beseitigen.

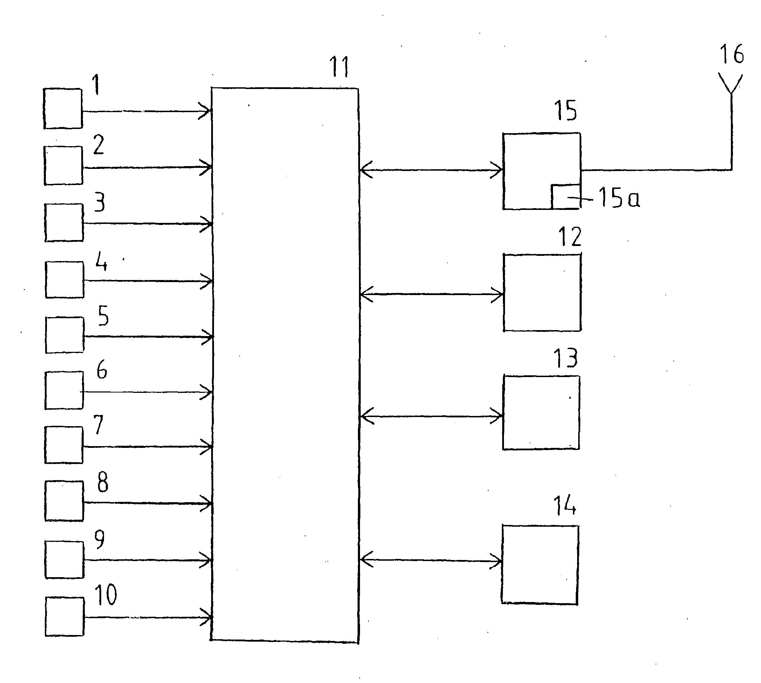

Weitere vorteilhafte Eigenschaften der Erfindung ergeben sich aus der Erläuterung eines Ausführungsbeispiels anhand der Figur.

Diese zeigt eine Vorrichtung zur Aussendung von Notrufsignalen mit Sensoren 1 bis 10, einem Mikrocomputer 11, einem Speicher 12, einem GPS-Empfänger 13, einem Sprachsynthesizer 14 und einem Autotelefon 15, welches einen Rufnummernspeicher 15a und eine Sende- und Empfangsantenne 16 aufweist.

Bei jedem der Sensoren 1 bis 10 kann es sich um ein einzelnes Sensorenelement handeln, aber auch um eine Gruppe von Sensorelementen. Diese Sensoren stellen dem Mikrocomputer 11 eine Vielzahl von verschiedenartigen Daten zur Verfügung, die dem Mikrocomputer den Ist-Zustand des Fahrzeugs signalisieren.

Der Sensor 1 besteht aus beispielsweise drei Sensorelementen, die an der Vorderseite des Fahrzeugs entweder im Bereich der Stoßstange oder im Bereich des Fahrzeugkühlers vorgesehen sind. Diese Sensorelemente reagieren bei einem Frontaufprall des Fahrzeugs und stellen dem Mikrocomputer 11 Informationen über die Position des Aufpralls und die Schwere des Aufpralls zur Verfügung.

Der Sensor 2 besteht aus beispielsweise vier Sensorelementen, die an der rechten Außenseite des Fahrzeugs vorgesehen sind, beispielsweise im Bereich des rechten vorderen Kotflügels, der Beifahrertür, der rechten Rücksitztür und dem rechten hinteren Kotflügel. Diese Sensorelemente reagieren bei einem Aufprall auf die rechte Fahrzeugseite und stellen dem Mikrocomputer 11 Informationen über die Position des Aufpralls und die Schwere des Aufpralls zur Verfügung.

Der Sensor 3 besteht aus beispielsweise drei Sensorelementen, die an der Rückseite des Fahrzeugs entweder im Bereich der hinteren Stoßstange oder im Bereich unterhalb des Kofferraumdeckels vorgesehen sind. Diese Sensorelemente reagieren bei einem Heckaufprall auf das Fahrzeug und stellen dem Mikrocomputer 11 Informationen über die Position des Aufpralls und die Schwere des Aufpralls zur Verfügung.

Der Sensor 4 besteht aus beispielsweise vier Sensorelementen, die auf der linken Außenseite des Fahrzeugs vorgesehen sind, beispielsweise im Bereich des linken vorderen Kotflügels, der Fahrertür, der linken Rücksitztür und dem linken hinteren Kotflügel. Diese Sensorelemente reagieren bei einem Aufprall auf die linke Fahrzeugseite und stellen dem Mikrocomputer 11 Informationen über die Position des Aufpralls und die Dauer des Aufpralls zur Verfügung.

Der Sensor 5 besteht aus beispielsweise vier Sensorelementen, die auf dem Fahrzeugdach vorgesehen sind und bei einem Überschlag des Fahrzeugs dem Mikrocomputer 11 nähere Informationen über die entstandenen Deformationen des Fahrzeugdachs geben.

Der Sensor 6 besteht aus beispielsweise drei Rauchsensorelementen, von denen eines im Kofferraum des Fahrzeugs, eines in der Fahrgastzelle und eines im Motorraum vorgesehen ist. Diese Rauchsensorelemente reagieren auf den im Falle eines Fahrzeugbrandes entstehenden Rauch und führen dem Mikrocomputer 11 entsprechende Informationen zu.

Der Sensor 7 besteht aus beispielsweise sechs Glasbruchsensorelementen, von denen eines in jeder Fahrzeugscheibe vorgesehen ist. Diese Glasbruchsensorelemente reagieren bei einem Bruch der jeweiligen Fahrzeugscheibe und liefern unabhängig davon, ob der Glasbruch durch einen Unfall oder durch ein Einschlagen einer Scheibe verursacht wurde, entsprechende Informationen an den Mikrocomputer 11.

Der Sensor 8 besteht beispielsweise aus zwei Temperatursensorelementen, von denen eines im Motorraum des Fahrzeugs und das andere in der Fahrgastzelle vorgesehen ist. Diese Temperatursensorelemente reagieren - ebenso wie die Rauchsensorelemente - bei einem Fahrzeugbrand und liefern entsprechende Informationen an den Mikrocomputer 11. Der Sensor 9 besteht beispielsweise aus einem einzigen Sensorelement, welches auf Infrarotbasis arbeitet und auf ein unerlaubtes Entfernen des Autoradios aus dem Autoradioeinbauraum des Fahrzeugs reagiert.

Der Sensor 10 besteht beispielsweise ebenfalls nur aus einem einzigen Sensorelement, welches bei einer unerlaubten Öffnung der Fahrertür reagiert und dem Mikrocomputer 11 entsprechende Informationen liefert.

Der Mikrocomputer 11 ist derart programmiert, daß er die ihm von den Sensoren gelieferten Daten auswertet. Er ermittelt durch einen Vergleich mit vorabgespeicherten Datenmustem, ob die ihm zugeführten Daten die Alarmierung von Hilfsdiensten erforderlich machen oder nicht. Ist das der Fall, dann entscheidet der Mikrocomputer, welche Hilfsdienste aufgrund der von den Sensoren gelieferten Daten alarmiert werden müssen. Bei dieser Entscheidung macht er auch von im Speicher 12 abgespeicherten fahrer- und/oder fahrzeugspezifischen Daten Gebrauch. Beispielsweise kann im Speicher 12 eine Information darüber enthalten sein, daß der Fahrer des Kraftfahrzeugs schwer herzkrank ist, so daß im Falle eines Unfalls stets ein Notarzt zu verständigen ist.

Zur Alarmierung des jeweiligen Hilfsdienstes steuert der Mikrocomputer 11 das Telefon 15 an, so daß die dort im Rufnummernspeicher 15a abgespeicherten Notrufnummern der jeweils benötigten Hilfsdienste ausgelesen und automatisch nacheinander zum Aufbau einer Telefonverbindung mit dem jeweiligen Hilfsdienst verwendet werden. Die Reihenfolge der Anwahl der Hilfsdienste kann dabei durch eine entsprechende werks- oder benutzerseitige Vorprogrammierung fest vorgegeben sein. Beispielsweise kann diese Vorprogrammierung derart sein, daß eine Alarmierung des Notarztes grundsätzlich die höchste Priorität hat, eine Alarmierung der Feuerwehr die zweithöchste Priorität, eine Alarmierung der Polizei die dritthöchste Priorität, usw.

Ist die genannte Telefonverbindung zu einem der genannten Hilfsdienste aufgebaut, dann erfolgt auch eine Übertragung von Standortinformationen, die von einem mit dem Mikrocomputer 11 verbundenen GPS-Empfänger 13 abgeleitet sind, an den jeweiligen Hilfsdienst, der dann die benötigte Hilfe direkt zum momentanen Fahrzeugort schicken kann. Weiterhin können auch die in dem Speicher 12 abgespeicherten fahrer- oder fahrzeugspezifischen Daten zum jeweiligen Hilfsdienst übertragen werden, um stets sicherzustellen, daß auch die tatsächlich benötigte Hilfe geschickt wird.

Ferner können über die aufgebaute Telefonverbindung auch im Sprachsynthesizer 14 erzeugte Sprachsignale an den jeweiligen Hilfsdienst übertragen werden. Zu dieser Erzeugung von synthetischen Sprachsignalen steuert der Mikrocomputer 11 den Sprachsynthesizer 14 nach einer Auswertung der Sensorsignale an. Im Sprachsynthesizer 14 werden dann in Abhängigkeit von den Sensorsignalen jeweils synthetische Sprachsignale erzeugt, die beispielsweise Auskünfte über die Art und Schwere eines Unfalls geben. Das Personal beim jeweiligen Hilfsdienst bekommt auf diese Weise auch dann genaue Informationen über die Art und Schwere des Unfalls, wenn der Fahrzeugführer - beispielsweise aufgrund einer Bewußtlosigkeit - diese Auskünfte trotz einer automatisch aktivierten Freisprecheinrichtung nicht geben kann.

Nach alledem wird mittels der Erfindung ein flexibles Notrufsystem geschaffen, bei welchem sich die die Hilfsdienste anrufenden Vorgänge sämtlich im Kraftfahrzeug abspielen, so daß sichergestellt ist, daß die im jeweiligen Einzelfall benötigte Hilfe automatisch und schnellstmöglich alarmiert werden kann.

## Patentansprüche

1. Vorrichtung zur Aussendung von Notrufsignalen aus einem Kraftfahrzeug, mit
- einer Mehrzahl von Sensoren zur Detektion von Beschädigung durch Unfall oder Einbruch oder Feuer,
- einem Autotelefon, welches einen Rufnummernspeicher zur Abspeicherung mehrerer Notruftelefonnummem und eine Sendeeinheit zur Ausstrahlung von Notrufsignalen aufweist,
- einem Mikrocomputer zur Steuerung der Vorrichtung, wobei der Mikrocomputer zur Auswertung der von den Sensoren zur Verfügung gestellten Daten vorgesehen ist,
- wobei der Mikrocomputer in Abhängigkeit von den von den Sensoren (1 bis 10) zur Verfügung gestellten Daten eine Anwahl einer oder mehrerer dieser Notruftelefonnummern steuert, um Notrufsignale auszusenden,
wobei ein Sprachsynthesizer (14) vorhanden ist und der Mikrocomputer derart programmiert ist, dass er in Abhängigkeit von den von den Sensoren zur Verfügung gestellten Daten nach dem Aufbau einer Telefonverbindung den Sprachsynthesizer zur Abgabe von synthetisch erzeugten Sprachsignalen ansteuert, die Auskunft über die Art der Beschädigung durch Unfall oder Einbruch oder Feuer enthalten,
**dadurch gekennzeichnet, dass**
der Mikrocomputer derart programmiert ist, dass er aufgrung der von den Sensoren zur Verfügung gestellten Daten entscheidet, welcher Hilfsdienst oder welche Hilfsdienste alarmiert werden, und die Anwahl der Notrufnummer des jeweils benötigten Hilfsdienstes oder der Notrufnummern der jeweils benötigten Hilfsdienste steuert.

2. Vorrichtung nach Anspruch 1,
**dadurch gekennzeichnet, dass**
die von den Sensoren zur Verfügung gestellten Daten Informationen über die Schwere eines Unfalls enthalten.

3. Vorrichtung nach Anspruch 1 oder 2,
**dadurch gekennzeichnet, dass**
die Sensoren zur Detektion von Ereignissen unterschiedlicher Art vorgesehen sind.

4. Vorrichtung nach Anspruch 3,
**dadurch gekennzeichnet, dass**
sie einen oder mehrere Sensoren zur Detektion einer Deformation von Fahrzeugteilen aufweist.

5. Vorrichtung nach Anspruch 3 oder 4,
**dadurch gekennzeichnet, dass**
sie einen oder mehrere Glasbruchsensoren und/oder einen oder mehrere Rauchsensoren und/oder einen oder mehrere Temperatursensoren und/oder einen Sensor aufweist, der ein Entfernen des Autoradios aus dem Autoradioeinbauraum des Kraftfahrzeugs detektiert.

6. Vorrichtung nach einem oder mehreren der vorhergehenden Ansprüche,
**dadurch gekennzeichnet, dass**
eine Notruftelefonnummer die Telefonnummer der Polizei und/oder eine Notruftelefonnummer die Telefonnummer der Feuerwehr und/oder eine Notruftelefonnummer die Telefonnummer einer Service-Zentrale und/oder eine Notruftelefonnummer die Telefonnummer einer Service-Zentrale und/oder eine Notruftelefonnummer die Telefonnummer einer Rettungsleitzentrale und/oder eine Notruftelefonnummer die Telefonnummer eines Abschleppdienstes ist.

7. Vorrichtung nach einem oder mehreren der vorhergehenden Ansprüche,
**dadurch gekennzeichnet, dass**
sie mit einem bordeigenen Positionsbestimmungssystem verbunden ist und die ausgestrahlten Notrufsignale eine Information über den momentanen Standort des Fahrzeugs enthalten.

8. Vorrichtung nach einem oder mehreren der vorhergehenden Ansprüche,
**dadurch gekennzeichnet, dass**
sie einen Speicher (12) für fahrer- und/oder fahrzeugspezifische Daten enthält und diese Daten zusammen mit den Notrufsignalen ausgestrahlt werden.

9. Vorrichtung nach einem oder mehreren der vorhergehenden Ansprüche,
**dadurch gekennzeichnet, dass**
der Mikrocomputer derart programmiert ist, dass er in Abhängigkeit von den von den Sensoren zur Verfügung gestellten Daten nach dem Aufbau einer Telefonverbindung eine Freisprecheinheit im Kraftfahrzeug aktiviert.

## Claims

1. Device for broadcasting emergency signals from a motor vehicle, comprising
- a plurality of sensors for detecting damage due to an accident or a break-in or a fire,
- a car telephone that has a call number memory for storing a plurality of emergency telephone numbers and a transmitting unit for emitting emergency signals,
- a microcomputer for controlling the device, wherein the microcomputer is provided for the evaluation of the data provided by the sensors,
- wherein the microcomputer controls dialling of one or more of said emergency telephone numbers as a function of the data provided by the sensors (1 to 10) in order to transmit emergency signals,
- wherein a speech synthesizer (14) is present and the microcomputer is programmed in such a way that, as a function of the data provided by the sensors, it controls the speech synthesizer to deliver synthetically generated voice signals containing information about the nature of the damage due to the accident or the break-in or the fire after setting up a telephone connection,
**characterized in that**
the microcomputer is programmed in such a way that it decides on the basis of the data provided by the sensors which emergency service or which emergency services are alerted and controls the dialling of the emergency number of the respectively required emergency service or of the emergency numbers of the respectively required emergency services.

2. Device according to claim 1,
**characterized in that**
the data provided by the sensors contain information items about the severity of an accident.

3. Device according to claim 1 or 2,
**characterized in that**
the sensors are provided to detect events of various kinds.

4. Device according to claim 3,
**characterized in that**
it has one or more sensors for detecting deformation of vehicle parts.

5. Device according to claim 3 or 4,
**characterized in that**
it has one or more glass-breakage sensors and/or one or more smoke sensors and/or one or more temperature sensors and/or a sensor that detects the removal of the car radio from the car-radio installation compartment of the motor vehicle.

6. Device according to one or more of the preceding claims,
**characterized in that**
an emergency telephone number is the telephone number of the police and/or an emergency telephone number is the telephone number of the fire brigade and/or an emergency telephone number is the telephone number of a service centre and/or an emergency telephone number is the telephone number of a rescue control centre and/or an emergency telephone number is the telephone number of a tow-away service.

7. Device according to one or more of the preceding claims,
**characterized in that**
it is connected to an on-board position-determining system and the emergency signals emitted contain an information item about the instantaneous location of the vehicle.

8. Device according to one or more of the preceding claims,
**characterized in that**
it contains a memory (12) for driver-specific and/or vehicle-specific data and said data are emitted together with the emergency signals.

9. Device according to one or more of the preceding claims,
**characterized in that**
the microcomputer is programmed in such a way that, as a function of the data provided by the sensors, it activates a hands-free unit in the motor vehicle after a telephone connection has been set up.

## Revendications

1. Dispositif pour émettre des signaux d'appel d'urgence à partir d'un véhicule automobile, comportant
- une multiplicité de capteurs pour détecter un endommagement dû à un accident ou à une effraction ou à un incendie,
- un téléphone de voiture, qui comporte une mémoire de numéros d'appel pour mémoriser plusieurs numéros de téléphone d'appel d'urgence et une unité d'émission pour émettre des signaux d'appel d'urgence,
- un micro-ordinateur pour commander le dispositif, le micro-ordinateur étant prévu pour évaluer les données fournies par les capteurs,
- où le micro-ordinateur commande, en fonction des données délivrées par les capteurs (1 à 10), une sélection d'un ou de plusieurs de ces numéros d'appel d'urgence, pour émettre des signaux d'appel d'urgence,
- où est prévu un synthétiseur vocal (14), le micro-ordinateur étant programmé de telle sorte qu'en fonction des données fournies par les capteurs, après l'établissement d'une liaison téléphonique, il commande le synthétiseur vocal pour délivrer des signaux vocaux produits de façon synthétique, qui contiennent une indication concernant le type d'endommagement dû à un accident ou à une effraction ou à un incendie.
**caractérisé en ce**
le micro-ordinateur est programmé de manière à déterminer sur la base des données fournies par les capteurs le ou les services d'assistance devant être alertés, et à commander la composition du numéro d'appel d'urgence du service d'assistance nécessité correspondant, ou les numéros d'appel d'urgence des services d'assistance nécessités correspondants.

2. Dispositif selon la revendication 1, **caractérisé en ce que** les données fournies par les capteurs contiennent des informations concernant la gravité d'un accident.

3. Dispositif selon la revendication 1 ou 2, **caractérisé en ce que** les capteurs sont prévus pour détecter des événements de différents types.

4. Dispositif selon la revendication 3, **caractérisé en ce qu'**il comporte un ou plusieurs capteurs pour détecter une déformation de parties du véhicule.

5. Dispositif selon la revendication 3 ou 4, **caractérisé en ce qu'**il comporte un ou plusieurs capteurs de bris de vitres et/ou un ou plusieurs capteurs de fumée et/ou un ou plusieurs capteurs de température et/ou un capteur, qui détecte le retrait de l'autoradio de l'espace de montage de l'autoradio dans le véhicule automobile.

6. Dispositif selon une ou plusieurs des revendications précédentes, **caractérisé en ce qu'**un numéro de téléphone d'appel d'urgence est le numéro de téléphone de la police et/ou un numéro de téléphone d'appel d'urgence est le numéro de téléphone des pompiers et/ou un numéro d'appel d'urgence est le numéro de téléphone d'un central de service et/ou un numéro d'appel d'urgence est le numéro d'appel d'un central des pompiers et/ou qu'un numéro d'appel d'urgence est le numéro de téléphone d'un service de remorquage.

7. Dispositif selon une ou plusieurs des revendications précédentes, **caractérisé en ce qu'**il est relié à un système de détermination de position installé à bord et que les signaux d'appel d'urgence émis contiennent une information concernant l'emplacement instantané du véhicule.

8. Dispositif selon une ou plusieurs des revendications précédentes, **caractérisé en ce qu'**il contient une mémoire (12) pour des données spécifiques au conducteur et/ou au véhicule et que ces données sont émises conjointement avec les signaux d'appel d'urgence.

9. Dispositif selon une ou plusieurs des revendications précédentes, **caractérisé en ce que** le micro-ordinateur est programmé de telle sorte qu'en fonction des données fournies par les capteurs, après l'établissement d'une liaison téléphonique, il active l'unité à mains libres dans le véhicule automobile.
